# NEUE EUROPÄISCHE PATENTSCHRIFT

(11) **EP 3 081 064 B2**
(45) Veröffentlichungstag und Bekanntmachung des Hinweises auf die Entscheidung über den Einspruch: **23.08.2023**
(45) Hinweis auf die Patenterteilung: 26.02.2020
(21) Anmeldenummer: 16000812.4
(22) Anmeldetag: 08.04.2016
(51) Int. Cl.: A01B 71/08, A01D 34/62, A01D 34/73

(54) **HILFSVORRICHTUNG ZUM MESSERWECHSEL AN LANDWIRTSCHAFTLICHEN MÄHMASCHINEN**
AUXILIARY DEVICE FOR KNIFE CHANGE ON AGRICULTURAL GRASS-CUTTER MOWING MACHINES
DISPOSITIF AUXILIAIRE DE CHANGEMENT DE COUTEAU SUR DES MOISSONNEUSES AGRICOLES

(30) Priorität: 17.04.2015 DE 102015004944
(43) Veröffentlichungstag der Anmeldung: 19.10.2016
(73) Patentinhaber: Maschinenfabrik Bernard Krone GmbH & Co. KG, 48480 Spelle (DE)
(72) Erfinder: Heet, Hans-Dieter, 48480 Spelle (DE); Lömker, Jens, 48496 Hopsten (DE)
(74) Vertreter: Busse & Busse

(56) Entgegenhaltungen:
- EP-A1- 0 717 921
- EP-A1- 0 809 929
- EP-A1- 0 809 929
- EP-A1- 1 008 289
- EP-A1- 1 008 289
- EP-A1- 2 191 709
- EP-A1- 2 191 709
- DE-A1- 3 304 199
- DE-A1- 10 036 552
- DE-A1- 10 036 552
- DE-A1- 10 048 771
- DE-A1- 10 048 771
- DE-A1-102009 027 223
- US-A- 5 544 862
- US-A- 5 544 862
- US-A1- 2013 055 546
- US-A1- 2013 055 546
- US-B1- 6 829 878
- US-B1- 6 829 878
- US-B1- 8 302 274
- US-B1- 8 302 274

## Beschreibung

Die Erfindung betrifft eine Hilfsvorrichtung zum Messerwechseln an einer landwirtschaftlichen Mähmaschine nach dem Oberbegriff des Patentanspruchs 1.

In der landwirtschaftlichen Feldbearbeitung werden regelmäßig Mähmaschinen eingesetzt, um vorzugsweise halmgutartige Biomasse zu bearbeiten. Moderne Mähmaschinen sind häufig als Rotationsmähwerke ausgeführt. Ein gängiger Aufbau dieser Maschinen besteht aus einer Vorrichtung zum Koppeln an einen Traktor, einem Grundgestell und einem Mähholm, auf dem wiederum eine Vielzahl von rotierenden Schneidwerkträgern, sogenannten Mähscheiben montiert sind. Durch den heutzutage häufigen Einsatz dieser Mähmaschinen, oft drei bis fünf Einsätze pro zu bearbeitender Fläche in einer Saison und dem Umstand, dass die Mähmaschinen zumeist in Bodennähe oder unmittelbar auf dem Boden aufliegend arbeiten, leiden die Messer unter erhöhtem Verschleiß durch Kontakt mit Bodenpartikeln oder darauf befindlichen Gegenständen, beispielsweise Steinen. Daraus resultierte die Notwendigkeit einer vereinfachten Montage der an den Mähscheiben befindlichen Messer, was die Entwicklung von Messerschnellverschlüssen zur Folge hatte.

Derartige Messerschnellverschlüsse und dazugehörige Werkzeuge sind aus der Praxis in zahlreichen Ausführungen bekannt. Als Beispiel für solche Messerschnellverschlüsse sei auf die EP 2 191 709 A1 verwiesen. Die Ausführungen dieser Messerschnellverschlüsse sind vielfältig, folgen aber einem vergleichbaren Prinzip. Es werden zumeist zwei grundlegende Komponenten, ein starres Bauteil und ein flexibles Bauteil zur schwenkbeweglichen Halterung der Messer genutzt, wobei ein Haltebolzen oder bolzenähnliches Bauteil an einem der beiden Bauteile in eine Bohrung eines Messers und gegebenenfalls zusätzlich in eine Bohrung in dem, den bolzenähnlichen Bauteil gegenüberliegenden Bauteil in Eingriff gebracht wird. Das flexible Bauteil kann von einem Hebel verdrängt werden, um ein Messer vom bolzenähnlichen Bauteil trennen oder einsetzen zu können. Solche manuellen Hilfsvorrichtungen sind zum Beispiel aus EP 1 008 289 A1 bekannt.

Die DE 100 48 771 A1 offenbart eine Vorrichtung zum sicheren und bequemen Arbeiten mit landwirtschaftlichen Arbeitsmaschinen, mit der ein sicherer und bequemer Austausch von Arbeitswerkzeugen an den Werkzeugträgern der Arbeitsmaschinen durchführbar ist. Aufgrund der großen Vielfalt bei den Befestigungsmöglichkeiten zwischen Arbeitswerkzeugen und deren Werkzeugträgern konzentriert sich diese Schrift auf Schraubverbindungen, mit denen Messer an rotierend angetriebenen Mähscheiben angebracht sind. In diesem Zusammenhang Ist darauf hinzuweisen, dass Schraubverbindungen als Befestigungsmittel für die Messer an Mähscheiben sicherlich nicht als Messerschnellverschluss gelten können, da die Schraubenköpfe oder Muttern dieser Schraubverbindungen zunächst in zeitaufwändiger Welse von Erd- oder Erntegutanhaftungen gereinigt werden müssen, bevor ein Werkzeug zum Lösen der Schraubverbindung überhaupt erst wirksam werden kann. In den Absätzen [0002] und [0003] werden diese Unterschiede zunächst deutlich herausgestellt. Im weiteren Verlauf der Beschreibungsunterlagen findet sich jedoch keinerlei Hinweis auf eine Nutzung anderer Befestigungsmittel als der Schraubverbindung zur Befestigung der Messer an den Mähscheiben.

Aus der US 2013/055546 A1 geht ein Schneidbalken mit rotierend antreibbaren Schneidscheiben hervor, wobei die Schneidscheiben zwei Anlenkstellen für Schneidmesser aufweisen. Jede Anlenkstelle eines Schneidmessers ist dabei so gestaltet, dass eine von unten an der Schneidscheibe befestigte Federplatte mit einer Schwenkbuchse einen von der Oberseite der Schneidscheibe eingesetzten Haltebolzen übergreift und mithin dafür sorgt, dass die Schneidmesser mit einem Montageloch schwenkbeweglich gehaltert sind. Um ein unbeabsichtigtes Lösen der Messerbefestigung zu verhindern, weist der Haltebolzen gemäß der Erfindung dieser Schrift ein weiteres Sicherungsmittel auf. Als weiteres Sicherungsmittel dient ein Stiftelement, welches am unteren Ende des Schaftes des Haltebolzens in diesen eingesetzt ist und im arretierten Zustand eine Haltestruktur im Innern der Schwenkbuchse untergreift. Zur gezielten Öffnung der Messerbefestigung ist dann eine Drehung des Haltebolzens um 90° erforderlich, damit das Stiftelement aus der Arretierung der Fangstruktur gelöst wird. Erst dann kann durch eine translatorische Bewegung der Haltebolzen nach oben bewegt werden, so dass die Federplatte mit der Schwenkbuchse durch ein Spezialwerkzeug nach unten verschwenkt werden kann und das Messer freigibt.

Bei Wartungs- oder Instandhaltungsmaßnahmen, welche den Tausch mehrerer oder aller Messer an einer Mähmaschine vorsehen, entsteht durch die zunehmende Arbeitsbreite, der damit einhergehenden erhöhten Anzahl von Mähscheiben und somit der verbauten, zu wechselnden Messer in modernen Mähmaschinen und/oder Mähkombinationen, trotz Vereinfachung durch Hebeleinsatz, ein enormer Kraft- und Zeitaufwand, sowie eine mögliche Verletzungsgefahr durch Abrutschen des Hebels oder Quetschgefahr durch zurückschnellende flexible Bauteile.

Aufgabe der Erfindung ist es daher, eine Hilfsvorrichtung anzubieten, welche die Nachteile, die sich aus dem Stand der Technik ergeben, minimiert und somit Kraft- und Zeitaufwand bei der Entnahme oder Bestückung von Messern an einer Mähscheibe mit Messerschnellverschluss an einer Mähmaschine verringert und gleichzeitig die Arbeitssicherheit erhöht.

Erfindungsgemäß wird diese Aufgabe durch die kennzeichnenden Merkmale des Anspruchs 1 gelöst. Vorteilhafte Weiterbildungen der Erfindung sind Gegenstand der weiteren Ansprüche und Ausführungsbeispiele,

Gemäß der Erfindung wird eine Hilfsvorrichtung zum Wechseln von Messern einer Mähmaschine mit einem, zumindest zwei rotierende Mähscheiben aufweisenden, Mähholm vorgeschlagen, wobei die Messer über einen Messerschnellverschluss mit der Mähscheibe verbunden sind, wobei der Messerschnellverschluss ein flexibles Bauteil umfasst, das als ein federnd nachgiebiges Halteelement ausgebildet ist, wobei die an die Mähschelbe herangeführte Hilfsvorrichtung dazu eingerichtet ist, den Messerschnellverschluss antriebsenergiebetätigt zum Aus- bzw. Einbau eines Messers zu öffnen und nach dem Aus- bzw. Einbau des Messers wieder zu verschließen, wobei der antriebsenergiebetätigte Öffnungs- und Schließvorgang des Messerschnellverschlusses durch wenigstens einen Aktor der Hilfsvorrichtung ausführbar ist, der dazu eingerichtet Ist, den Öffnungs- und Schließvorgang durch Verlagerung des flexiblen Bauteils In eine vorgesehene Richtung auszuführen.

Unter dem Begriff der Antriebsenergiebetätigung soll in diesem Zusammenhang der Einsatz eines Energieträgers zur Ausführung der gewünschten Aktionen verstanden werden. So können beispielsweise pneumatische, hydraulische oder elektrische Energie in Betracht gezogen werden. Dabei sieht die Erfindung vor, die Hilfsvorrichtung an eine Antriebsenergiequelle anzuschließen, oder einen Speicher für verwendete Antriebsenergie vor Gebrauch aufzuladen, um im Anschluss die Hilfsvorrichtung an eine Mähscheibe mit Messerschnellverschluss heranzuführen. Dort wird ein Öffnungsvorgang ausgelöst, wonach das Messer entnommen und/oder eingesetzt werden kann, um im Anschluss daran durch einen ausgelösten Schließvorgang ein Messer in einem Messerschnellverschluss zu fixieren, sodass daraufhin die antriebsenergiebetriebene Hilfsvorrichtung entfernt und/oder an den nächsten Einsatzbereich geführt werden kann.

Eine Ausführung sieht hierbei vor, die Hilfsvorrichtung mit wenigstens einer, in vertikaler Richtung wirkenden, fluidbetriebenen Kolbenzylindereinheit aufzubauen, welche mit zwei vertikal arbeitenden Kolbenstangen mit horizontal ausgerichtetem Flachmaterial ausgestattet ist, um mit einer Arretierung an der Hilfsvorrichtung gemeinsam in einen, sonst für Hebel vorgesehenen, Spalt zwischen dem starren und dem flexiblen Bauteil der Mähscheibe angesetzt zu werden. Durch Beaufschlagen des fluidbetriebenen Zylinders mit entsprechender Antriebsenergie wird nun das flexible Bauteil der Mähscheibe durch eine vertikal ausgerichtete Bewegung verdrängt, sodass der Messerschnellverschluss geöffnet wird und ein Messer eingesetzt oder entnommen werden kann.

Dabei ist der Messerschnellverschluss derart konzipiert, dass ein starres Bauteil als außenliegender Abschnitt einer Messerscheibe ausgeprägt ist, während der flexible Bauteil ein federnd nachgiebiges Halteelement ist. Zusätzlich ist eines der beiden Bauteile mit einem bolzenähnlichen Bauteil versehen, welches mit einer im Messer befindlichen Durchgangsbohrung und einer Bohrung in dem, dem bolzenähnlichen Bauteil gegenüberliegendem Bauteil in Eingriff gebracht wird, sodass besagtes Messer schwenkbeweglich und sicher in der vorgesehenen Position fixiert wird. Hierbei ist auch der Einsatz von elektrisch angetriebenen Linearantrieben anstelle der oben aufgeführten Kolbenzylindereinheiten denkbar.

In einer weiteren erfindungsgemäßen Ausführung arbeiten Kolbenzylindereinheiten nicht vertikal, sondern horizontal, wobei am Ende wenigstens einer Kolbenstange ein keilförmiger Aufsatz angebracht wird. Dieser Aufsatz ist bei Beaufschlagung der Kolbenzylindereinheiten mit Antriebsenergie für eine Verdrängung des flexiblen Bauteils an einem Messerschnellverschluss verantwortlich. Hierbei können beispielsweise zwei gegeneinander ausgerichtete Kolbenzylindereinheiten eingesetzt werden, oder eine Kolbenzylindereinheit im Verbund mit einer Arretierung an der Hilfseinrichtung, um eine Mähscheibe bei einem Öffnungsvorgang des Messerschnellverschlusses in Position zu halten. Auch hierbei ist sowohl der Einsatz von fluidbetriebenen, als auch elektronisch betriebenen Linearantrieben denkbar.

Weiterhin kann erfindungsgemäß wenigstens ein Rotationsantrieb in einer Hilfsvorrichtung eingesetzt werden, um somit eine Hebelbewegung nachzustellen, nachdem eine derartige Hilfsvorrichtung an der Mähscheibe mit Messerschnellverschluss herangeführt worden ist. Somit wird also ein federnd gelagertes Bauteil durch eine Drehbewegung des wenigstens einen Rotationsantriebs in vorgesehener Richtung verlagert, indem ein Flachmaterial, beispielsweise ein Flachstahl, an dem besagten Antrieb gekoppelt ist und in den, für einen Hebel vorgesehenen, Spalt zwischen einem federnd gelagerten Bauteil und einem außenliegenden Abschnitt der Mähscheibe geführt wird und bei Auslösen der Drehbewegung eines Rotationsantriebs für die Verdrängung des flexiblen Bauteils sorgt. Abermals kann sowohl die Verwendung von fluidbetriebenen, als auch elektronisch betriebenen Rotationsantrieben in Betracht gezogen werden.

In einer Weiterbildung der Erfindung kann es vorgesehen sein, eine Hilfsvorrichtung an einer Mähmaschine, insbesondere einer selbstfahrenden Arbeitsmaschine mit Mähwerken, anzubringen, bzw. unterzubringen. Demnach könnte eine Mähmaschine oder selbstfahrende Arbeitsmaschine über Stauraum und/oder Stauflächen für eine Hilfsvorrichtung und entsprechende Zuleitungen, wie Luftschläuchen, Hydraulikschläuchen, Stromkabeln oder ähnliches verfügen, denkbarerweise auch in aufrollbarer oder selbstaufrollender Form.

Eine detaillierte Beschreibung eines Gegenstandes der Erfindung erfolgt nun anhand eines Ausführungsbeispiels. In der Zeichnung wird folgendes dargestellt:
**Fig. 1****:** eine perspektivische Darstellung eines Mähholmes mit einer herangeführten Ausführungsvariante einer Hilfsvorrichtung;
**Fig. 2****:** einen Ausschnitt aus Fig. 1 mit vergrößerter Ansicht einer Ausführung der Hilfsvorrichtung;
**Fig. 3****:** einen Längsschnitt einer Hilfsvorrichtung an einem, auf einem Mähholm montierten, Messerteller gemäß Schnitt III-III in Fig. 2;
**Fig. 4****:** einen Querschnitt einer Hilfsvorrichtung an einem, auf einem Mähholm montierten, Messerteller gemäß Schnitt IV-IV in Fig. 3

### Bezugszeichenliste

1) Hilfsvorrichtung
2) Gehäuse
3) Anschluss für Antriebsenergie
4) Aktor (Linearantrieb)
5) Kolben
6) Kolbenstange
7) Betätigungseinheit
8) Querfortsatz
9) Arretierung
10) Mähholm
11) Mähscheibe
12) Messerschnellverschluss
13) starres Bauteil
14) flexibles Bauteil
15) bolzenähnliches Bauteil
16) Messer

Viele moderne Rotationsmähwerke verwenden ein System zur schnelleren Durchführung von Messerwartung/-wechseln, einem so genannten Messerschnellverschluss 12.

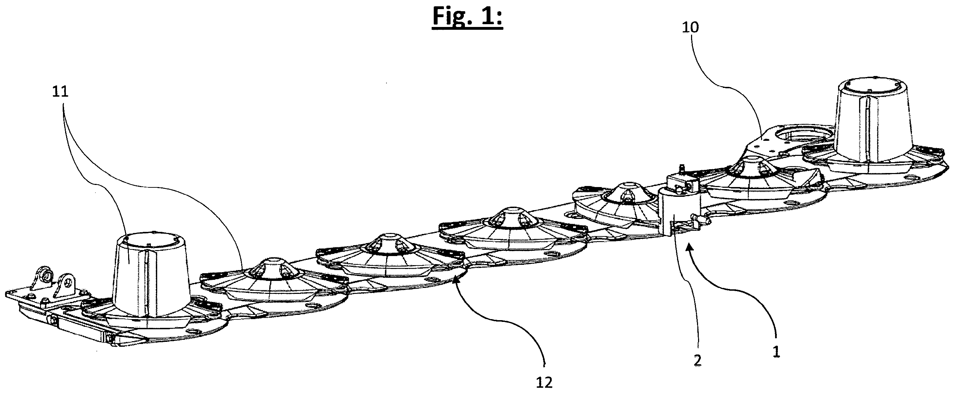

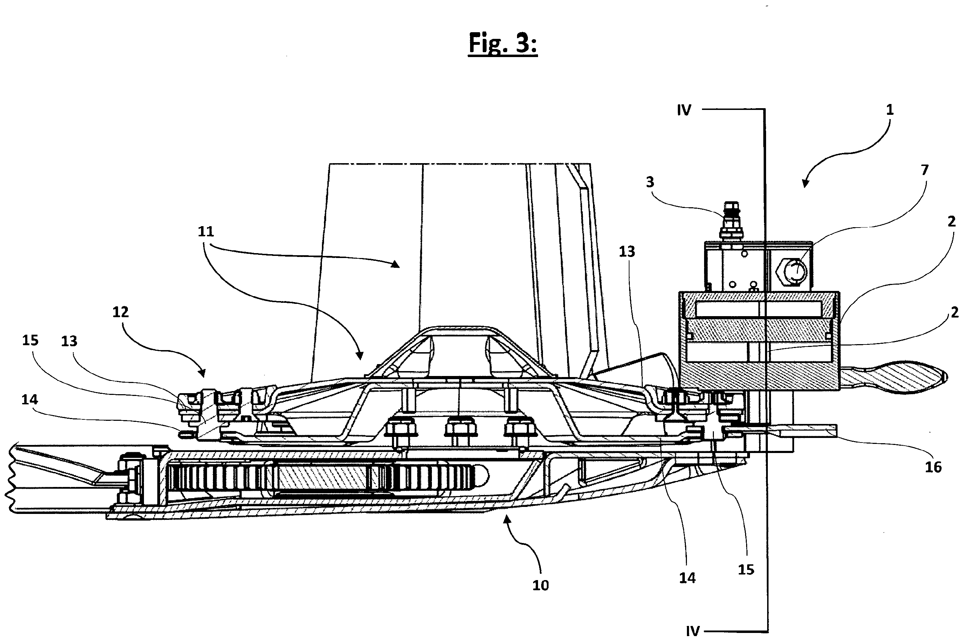

Eine Ausführung eines modernen Rotationsmähwerks besteht aus einem Gehäuse, welches u.a. mit Sicherheitsvorrichtungen wie Abstandshaltern oder Schutzabdeckungen ausgerüstet sein kann. Ein essentieller Teil eines solchen Rotationsmähwerks ist ein Mähholm 10, wie in Fig. 1 dargestellt. Auf einen solchen Mähholm 10 können verschiedenartig ausgeprägte Mähscheiben 11 montiert werden. In **Fig. 1** sind die Mähscheiben 11 ellipsenförmig ausgebildet. Diese Mähscheiben 11 verfügen über einen Messerschnellverschluss 12, der derart aufgebaut ist, dass ein starrer Bauteil 13, in diesem Fall ein außenliegender Abschnitt der Mähscheibe 11 ausgelegt ist, mit einem bolzenähnlichen Bauteil 15, hier als Haltebolzen ausgeführt, versehen zu werden. Dieser wird mit einer Durchgangsöffnung an einem, für die Mähscheibe 11 vorgesehenen, Messer 16 und einer Durchgangsöffnung an einem flexiblen Bauteil 14, in **Fig. 3** als federnd nachgiebiges Halteelement zu sehen, in Eingriff gebracht, um das Messer 16 in seiner Position an der Mähscheibe 11 schwenkbeweglich zu fixieren.

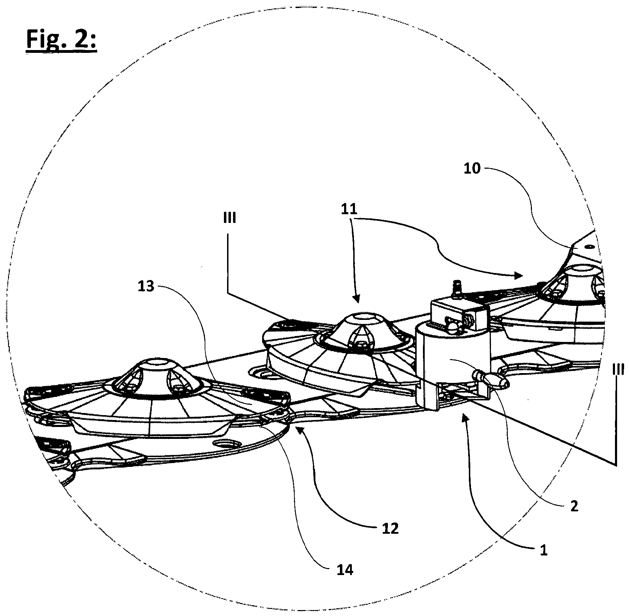

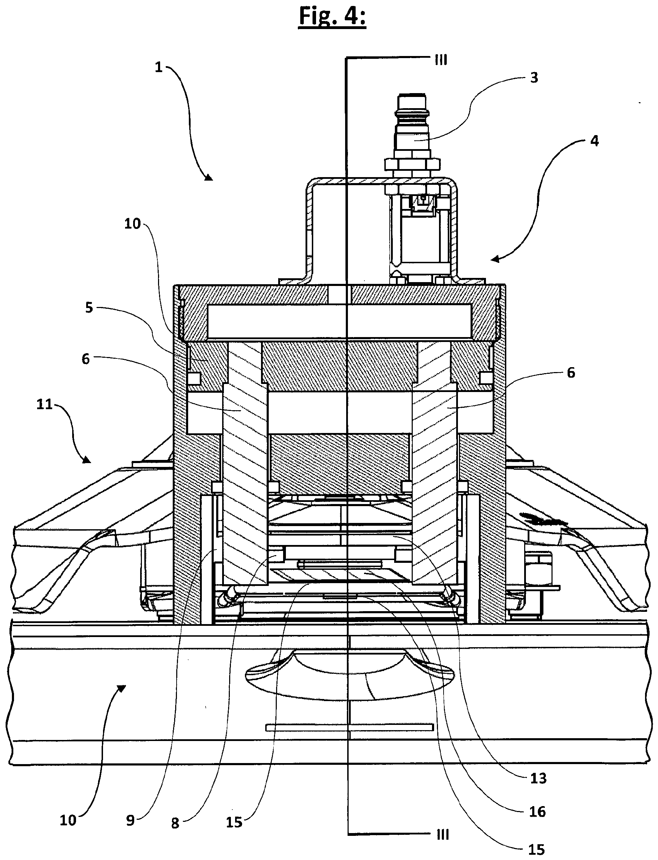

Eine Ausführung der Hilfsvorrichtung 1 ist, wie in **Fig. 1** und **Fig. 2** erkennbar, derart konzipiert, dass ein zylinderförmiges Gehäuse 2 mit einer in das Gehäuse 2 eingelassenen Öffnung voran an eine Mähscheibe 11 geführt wird. Eine Arretierung 9 am Gehäuse 2 und ein Querfortsatz 8 an wenigstens einer Kolbenstange 6 werden dabei durch einen Spalt geschoben, der sich beidseitig des Messers 16, bzw. dem dafür vorgesehenen Platz, zwischen dem, am außenliegenden Abschnitt befindlichen, starren Bauteil 13 der Mähscheibe 11 und dem, als federnd nachgiebiges Halteelement vorgesehenen, flexiblen Bauteil 14 ergibt. Die beschriebene Positionierung der Hilfsvorrichtung ist auch den **Fig. 3** und **Fig. 4** zu entnehmen.

Nachdem die Hilfsvorrichtung 1 wie beschrieben in Stellung an einer Mähscheibe 11 angebracht ist, kann ein Öffnungsvorgang des Messerschnellverschlusses 12 eingeleitet werden. Hierzu wird eine Betätigungseinheit 7 an der Hilfsvorrichtung 1 (in diesem Beispiel ein Hebel) bedient, worauf der antriebsenergiebetätigte Öffnungsvorgang erfolgt. In dieser Ausführung wird beispielsweise nach der Aktivierung durch den Bediener also ein Aktor 4 mit Druckluft beaufschlagt, welcher durch den Anschluss 3 versorgt wird. Durch die Druckluft wird wenigstens ein Kolben 5 in vertikaler Richtung nach unten verdrängt, wodurch die daran gekoppelten Kolbenstangen 6 der Bewegung folgen. Die an den Kolbenstangen 6 angebrachten Querfortsätze 8 verdrängen jetzt, nachdem die Arretierung 9 an dem Gehäuse 2 von unten in das starre Bauteil 13 der Mähscheibe 11 greift, das flexible Bauteil 14 in vorgesehener Richtung (abwärts), bis ein bolzenähnliches Bauteil 15 weit genug freigelegt ist, dass ein Messer 16 entnommen, und/oder eingesetzt werden kann. Das flexible Bauteil 14 wird also so weit nach unten gedrückt, dass der Abstand zwischen flexiblem Bauteil 14 und dem bolzenähnlichen Bauteil 15 mindestens der Stärke des Messers 16 entspricht.

Wird jetzt die Betätigungseinheit 7 deaktiviert, so wird im Falle eines einfach wirkenden Zylinders der Kolben 5 samt Kolbenstangen 6 durch das flexible Bauteil 14 wieder in seine Ursprungsposition zurück geschoben. Sollte ein doppelt wirkender Zylinder eingesetzt werden, kann die Aktivierungsenergie durch die Betätigungseinheit reversiert werden, um so Kolben 5 und Kolbenstangen 6 wieder zurück zu stellen. Damit einhergehend wird ein Messer, nach dem Austausch oder Einsetzen, wie vorgesehen mittels Haltebolzen 15 zwischen dem starren Bauteil 13 und dem flexiblen Bauteil 14 in seiner Position fixiert.

Die Hilfsvorrichtung 1 kann nun von der Mähscheibe 11 entfernt werden und gegebenenfalls an den nächsten Messerschnellverschluss 12 herangeführt werden, wo der oben beschriebene Vorgang wiederholt werden kann, um weitere Messer 16 zu tauschen, zu wenden, einzusetzen oder zu entfernen.

## Patentansprüche

1. Hilfsvorrichtung (1) zum Wechseln von Messern (16) einer Mähmaschine mit einem zumindest zwei rotierende Mähscheiben (11) aufweisenden Mähholm (10), wobei die Messer (16) über einen Messerschnellverschluss (12) mit der Mähscheibe (11) verbunden sind, wobei der Messerschnellverschluss (12) ein flexibles Bauteil (14) umfasst, das als federnd nachgiebiges Halteelement ausgebildet ist, wobei die an die Mähscheibe (11) herangeführte Hilfsvorrichtung (1) dazu eingerichtet ist, den Messerschnellverschluss (12) antriebsenergiebetätigt zum Aus- bzw. Einbau eines Messers (16) zu öffnen und nach dem Aus- bzw. Einbau des Messers (16) wieder zu verschließen, **dadurch gekennzeichnet, dass** der antriebsenergiebetätigte Öffnungs- und Schließvorgang des Messerschnellverschlusses (12) durch wenigstens einen Aktor (4) der Hilfsvorrichtung (1) ausgeführt wird, der dazu eingerichtet ist, den Öffnungs- und Schließvorgang des Messerschnellverschlusses (12) durch Verlagerung des flexiblen Bauteils (14) in eine vorgesehene Richtung auszuführen, wobei der zu betätigende Messerschnellverschluss (12) aus einem starren Bauteil (13), dem flexiblen Bauteil (14) und einem bolzenähnlichen Bauteil (15) besteht, durch welchen ein Messer (16) in seiner Position an der Mähscheibe (11) schwenkbeweglich fixiert wird.

2. Hilfsvorrichtung (1) nach Anspruch 1, **dadurch gekennzeichnet, dass** wenigstens ein Aktor (4) in vertikaler Richtung wirkend betreibbar ist.

3. Hilfsvorrichtung (1) nach Anspruch 1, **dadurch gekennzeichnet, dass** wenigstens ein Aktor (4) in horizontaler Richtung wirkend betreibbar ist.

4. Hilfsvorrichtung (1) nach einem der vorherigen Ansprüche, **dadurch gekennzeichnet, dass** der zumindest eine Aktor (4) ein Linearantrieb ist.

5. Hilfsvorrichtung (1) nach einem der vorherigen Ansprüche, **dadurch gekennzeichnet, dass** der zumindest eine Aktor (4) ein Rotationsantrieb ist.

6. Hilfsvorrichtung (1) nach einem der vorherigen Ansprüche, **dadurch gekennzeichnet, dass** wenigstens ein Aktor (4) mit einem Fluid betreibbar ist.

7. Hilfsvorrichtung (1) nach Ansprüche 1 bis 5, **dadurch gekennzeichnet, dass** wenigstens ein Aktor (4) mit elektrischem Strom betreibbar ist.

8. Hilfsvorrichtung (1) nach Anspruch 1, **dadurch gekennzeichnet, dass** das starre Bauteil (13) des Messerschnellverschlusses (12) als außenliegender Abschnitt der Mähscheibe (11) ausgebildet ist.

9. Hilfsvorrichtung (1) nach Anspruch 7, **dadurch gekennzeichnet, dass** der genutzte elektrische Strom einem mobilen Energiespeicher entstammt.

10. Hilfsvorrichtung (1) nach Anspruch 9, **dadurch gekennzeichnet, dass** der mobile Energiespeicher wiederaufladbar ist.

## Claims

1. Auxiliary device (1) for changing blades (16) of a mower comprising a cutterbar (10) that has at least two rotating cutting discs (11), the blades (16) being connected to the cutting disc (11) by a quick-release blade fastener (12), the quick-release blade fastener (12) comprising a flexible component (14) which is designed as a resiliently flexible holding element, the auxiliary device (1) which is brought up to the cutting disc (11) being configured to open the quick-release blade fastener (12) in a manner actuated by drive energy in order to remove and/or install a blade (16) and to close the quick-release blade fastener again after the blade (16) has been removed and/or installed, **characterized in that** the drive energy-actuated opening and closing process of the quick-release blade fastener (12) is carried out by at least one actuator (4) of the auxiliary device (1), which actuator is configured to carry out the opening and closing process of the quick-release blade fastener (12) by moving the flexible component (14) in a designated direction, the quick-release blade fastener (12) to be actuated consisting of a rigid component (13), the flexible component (14) and a bolt-like component (15), by means of which a blade (16) is fixed in its position so as to be pivotable on the cutting disc (11).

2. Auxiliary device (1) according to Claim 1, **characterized in that** at least one actuator (4) can be operated so as to act in a vertical direction.

3. Auxiliary device (1) according to Claim 1, **characterized in that** at least one actuator (4) can be operated so as to act in a horizontal direction.

4. Auxiliary device (1) according to any of the preceding claims, **characterized in that** the at least one actuator (4) is a linear drive.

5. Auxiliary device (1) according to any of the preceding claims, **characterized in that** the at least one actuator (4) is a rotary drive.

6. Auxiliary device (1) according to any of the preceding claims, **characterized in that** at least one actuator (4) can be operated by means of a fluid.

7. Auxiliary device (1) according to Claims 1 to 5, **characterized in that** at least one actuator (4) can be operated by means of electrical power.

8. Auxiliary device (1) according to Claim 1, **characterized in that** the rigid component (13) of the quick-release blade fastener (12) is designed as an outer portion of the cutting disc (11).

9. Auxiliary device (1) according to Claim 7, **characterized in that** the electrical power used is derived from a mobile energy storage means.

10. Auxiliary device (1) according to Claim 9, **characterized in that** the mobile energy storage means is rechargeable.

## Revendications

1. Dispositif d'assistance (1) pour changer des couteaux (16) d'une faucheuse ayant un longeron de fauchage (10) équipé d'au moins deux disques faucheurs rotatifs (11), les couteaux (16) étant reliés au disque faucheur (11) par l'intermédiaire d'un mécanisme de verrouillage rapide de couteau (12), le mécanisme de verrouillage rapide de couteau (12) comprenant un élément flexible (14) qui est réalisé sous la forme d'un élément de retenue élastiquement flexible, le dispositif d'assistance (1) installé sur le disque faucheur (11) étant réalisé pour permettre d'ouvrir le mécanisme de verrouillage rapide de couteau (12) en étant actionné par l'énergie d'entraînement pour permettre de démonter ou de monter un couteau (16), et de le verrouiller à nouveau après le démontage ou le montage du couteau (16),
**caractérisé en ce que**
le processus d'ouverture et de fermeture du mécanisme de verrouillage rapide de couteau (12) actionné par l'énergie d'entraînement est mis en œuvre par l'intermédiaire d'au moins un actionneur (4) du dispositif d'assistance (1) qui est réalisé pour permettre la mise en œuvre du processus d'ouverture et de fermeture du mécanisme de verrouillage rapide de couteau (12) en déplaçant l'élément flexible (14) dans une direction définie, le mécanisme de verrouillage rapide de couteau (12) devant être actionné est constitué par un élément rigide (13), l'élément flexible (14) et un élément de type boulon (15) par lequel un couteau (16) est fixé en position sur un disque faucheur (11) en étant mobile en pivotement.

2. Dispositif d'assistance (1) conforme à la revendication 1,
**caractérisé en ce qu'**
au moins un actionneur (4) peut être actionné activement en direction verticale.

3. Dispositif d'assistance (1) conforme à la revendication 1,
**caractérisé en ce qu'**
au moins un actionneur (4) peut être actionné activement en direction horizontale.

4. Dispositif d'assistance (1) conforme à l'une des revendications précédentes,
**caractérisé en ce que**
l'au moins un actionneur (4) est un entraînement linéaire.

5. Dispositif d'assistance (1) conforme à l'une des revendications précédentes,
**caractérisé en ce que**
l'au moins un actionneur (4) est un entraînement rotatif.

6. Dispositif d'assistance (1) conforme à l'une des revendications précédentes,
**caractérisé en ce qu'**
au moins un actionneur (4) peut être commandé par un fluide.

7. Dispositif d'assistance (1) conforme aux revendications 1 à 5,
**caractérisé en ce qu'**
au moins un actionneur (4) peut être commandé par un courant électrique.

8. Dispositif d'assistance (1) conforme à la revendication 1,
**caractérisé en ce que**
l'élément rigide (13) du mécanisme de verrouillage rapide de couteau (12) est réalisé sous la forme d'un segment externe du disque faucheur (11).

9. Dispositif d'assistance (1) conforme à la revendication 7,
**caractérisé en ce que**
le courant électrique utilisé provient d'un accumulateur d'énergie mobile.

10. Dispositif d'assistance (1) conforme à la revendication 9,
**caractérisé en ce que**
l'accumulateur d'énergie mobile est rechargeable.
